# FASCICULE DE BREVET EUROPEEN

(11) **EP 2 938 511 B1**
(45) Date de publication et mention de la délivrance du brevet: **21.02.2018**
(21) Numéro de dépôt: 13824594.9
(22) Date de dépôt: 20.12.2013
(51) Int. Cl.: B60K 37/06, H01H 13/02, H01H 13/83, H01H 13/14, H01H 13/00, H01H 13/70, H01H 9/16

(54) **DISPOSITIF DE COMMANDE**
STEUERUNGSVORRICHTUNG
CONTROL DEVICE

(30) Priorité: 27.12.2012 FR 1262840
(43) Date de publication de la demande: 04.11.2015
(73) Titulaire: Valeo Systemes Thermiques, 78321 Le Mesnil-Saint-Denis (FR)
(72) Inventeur: LEKMINE, Djamel, 78320 Le Mesnil Saint Denis (FR)
(74) Mandataire: Pothmann, Karsten
(86) Numéro de dépôt international: PCT/FR2013/000359
(87) Numéro de publication internationale: WO 2014/102466

(56) Documents cités:
- EP-A1- 1 780 738
- DE-A1- 19 725 140
- GB-A- 2 276 767

## Description

La présente invention concerne un dispositif de commande à touches et en particulier un dispositif de commande à touches destiné à être installé dans un véhicule automobile.

Un dispositif de commande comprenant les caractéristiques du préambule de la revendication 1 est connu du document GB 2 276 767 A.

En effet, dans le cas des véhicules automobiles, les touches de commande doivent pouvoir être localisées facilement par les utilisateurs notamment pendant la conduite de nuit. Il apparait donc nécessaire d'éclairer les touches de manière continue lorsque la luminosité est faible.

D'autre part, il est également important pour les utilisateurs de connaître l'état d'activation des fonctions associées aux touches de commande. Il est connu dans l'état de la technique d'utiliser des témoins de fonction situés sur les touches de commande qui s'éclairent lorsque la fonction est activée.

Ainsi, chaque touche nécessite deux éclairages distincts pour la localisation et pour l'état d'activation ce qui pose d'une part un problème d'encombrement surtout si l'on souhaite des touches de commande de taille réduite et disposées de façon adjacente et d'autre part un problème de consommation électrique du fait du nombre d'éclairages nécessaires.

La présente invention vise donc à résoudre au moins partiellement les problèmes rencontrés dans l'état de la technique pour procurer un éclairage de localisation et un témoin de fonction sur des touches de taille réduite et disposées de manière adjacente.

Ainsi la présente invention concerne un dispositif de commande à touches comprenant au moins deux touches de commande associées à des fonctions et disposées de manière contiguë l'une par rapport à l'autre, lesdites au moins deux touches de commande comprenant respectivement :
- un élément mobile destiné à évoluer entre une position de repos et une position de commande qui comprend une partie externe sur laquelle vient appuyer un utilisateur,
- un témoin de fonction situé sur la partie externe de l'élément mobile,
- des premiers moyens de rétroéclairage configurés pour rétroéclairer le témoin de fonction lorsque la fonction associée à la touche de commande est activée,
dans lequel le dispositif de commande comprend également des seconds moyens de rétroéclairage ayant une couleur différente des premiers moyens de rétroéclairage et destinés à être activés indépendamment du statut d'activation de la fonction associée à la touche de commande , lesdits seconds moyens de rétroéclairage étant disposés à l'interface entre deux touches de commande contiguës de manière à éclairer les témoins de fonction de deux touches contiguës.

Selon un autre aspect de la présente invention, ledit dispositif comprend des parois opaques situées entre les touches de commande contiguës et en regard des seconds moyens de rétroéclairage, lesdites parois opaques permettant le guidage mécanique des éléments mobiles des touches de commande.

Selon un aspect supplémentaire de la présente invention, la partie de l'élément mobile en regard avec le témoin de fonction comprend un guide de lumière configuré pour transmettre la lumière issue des premiers et seconds moyens de rétroéclairage vers le témoin de fonction. Les seconds moyens de rétroéclairages étant positionnés de manière à éclairer les guides de lumière de deux touches adjacentes.

Selon un aspect additionnel de la présente invention, les coins du guide de lumière situés à proximité des seconds moyens de rétroéclairage sont de forme concave pour capter la lumière issue desdits seconds moyens de rétroéclairage.

Selon un aspect supplémentaire de la présente invention, la partie du guide de lumière située en regard des premiers moyens de rétroéclairage a une forme en dents de scie pour répartir la lumière dans le guide de lumière.

Selon un autre aspect de la présente invention, les premiers et seconds moyens de rétroéclairage comprennent au moins une diode électroluminescente.

Selon un aspect supplémentaire de la présente invention, la surface du guide de lumière située à proximité de la partie externe de l'élément mobile comprend une partie transparente ou translucide et une partie opaque, la partie transparente ou translucide correspondant au témoin de fonction et à une zone latérale périphérique.

Selon un aspect additionnel de la présente invention, la surface du guide de lumière située à proximité de la partie externe de l'élément mobile comprend une partie transparente ou translucide et une partie opaque, la partie transparente ou translucide correspondant au témoin de fonction.

Selon un autre aspect de la présente invention, la partie opaque est obtenue par application d'une peinture ou d'un chrome opaque.

Selon un aspect additionnel de la présente invention, le témoin de fonction est un pictogramme indiquant la fonction de commande associée à la touche de commande.

D'autres caractéristiques et avantages de l'invention apparaîtront dans la description qui va maintenant en être faite, en référence aux dessins annexés qui en représentent à titre indicatif mais non limitatif, un mode de réalisation possible.

Sur ces dessins :
- La figure 1 représente une vue de dessus et en coupe d'un dispositif comprenant une pluralité de touches contiguës selon un premier mode de réalisation ;
- La figure 2 représente une vue de dessus et en coupe d'un dispositif comprenant une pluralité de touches contiguës selon un deuxième mode de réalisation ;
- La figure 3 représente une vue de face d'une façade de commande comprenant un dispositif de commande à cinq touches.

Sur ces figures les mêmes numéros de référence correspondent à des éléments ayant la même fonction.

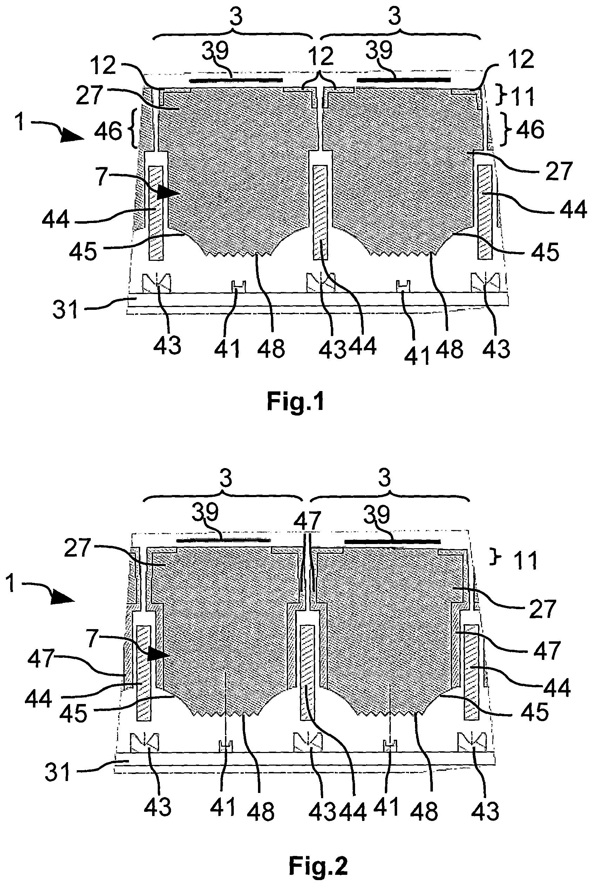

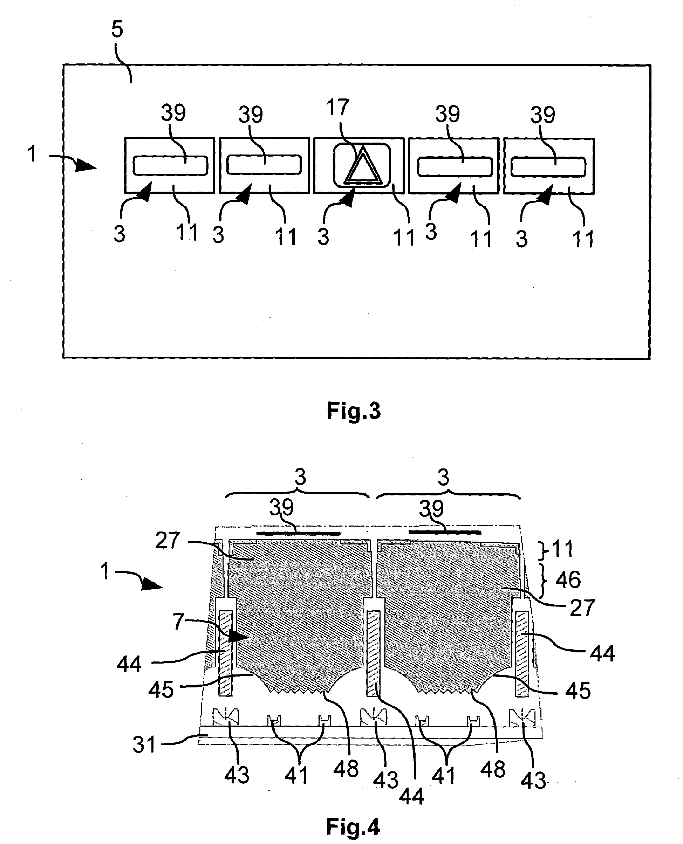

La présente invention concerne un dispositif de commande à touches 1 comprenant au moins deux touches de commande 3 disposées de manière contiguë l'une par rapport à l'autre. La figure 1 représente un exemple de réalisation d'un tel dispositif de commande 1. Le dispositif de commande 1 est par exemple installé sur une façade de commande 5 comme représenté sur la figure 3 dans le cas d'un dispositif de commande 1 comprenant cinq touches de commande 3. Les touches de commande 3 sont associées à des fonctions comme par exemple le dégivrage de la vitre arrière ou les phares antibrouillard du véhicule automobile.

Les touches de commande 3 comprennent un élément 7 mobile destiné à évoluer entre une position de repos et une position de commande qui comprend une partie externe 11 qui fait saillie hors de la façade de commande 5 et sur laquelle vient appuyer l'utilisateur. La touche de commande 3 peut être une touche à translation qui est guidée mécaniquement par des plots de guidage et dont l'appui par l'utilisateur provoque un déplacement en translation ou une touche à charnière ou tout autre type de touche de commande 3 permettant de positionner plusieurs touches 3 de manière contiguë.

Les touches de commande 3 comprennent également un moyen de commande (non représenté) actionné par l'élément mobile 7 et en particulier par le déplacement de l'élément mobile 7 entre sa position de repos et sa position de commande. Le moyen de commande est par exemple réalisé par un contacteur électrique sur lequel l'élément mobile 7 vient appuyer en position de commande.

Le moyen de commande peut également être réalisé par un détecteur optique, un détecteur à ultrasons, un détecteur à effet Hall ou tout autre dispositif de l'état de la technique permettant de détecter le passage de l'élément mobile 7 de sa position de repos à sa position de commande. Le signal d'activation peut être créé lors du passage de l'élément mobile 7 en position de commande ou lors de son retour en position de repos, c'est à dire lorsque l'utilisateur relâche la partie externe 11 de la touche de commande 3.

Les touches de commande comprennent également un témoin de fonction 39 situé sur la partie externe 11 de l'élément mobile 7 comme représenté sur les touches latérales de la figure 3. Selon un autre mode de réalisation, le témoin de fonction 39 peut être un pictogramme 17 représentant la fonction associée à la touche de commande 3 comme représenté sur la touche centrale de la figure 3.

Les touches de commande 3 comprennent également des premiers moyens de rétroéclairage 41 configurés pour rétroéclairer le témoin de fonction 39 lorsque la fonction associée à la touche de commande 3 est activée. Ainsi, les moyens de rétroéclairage 41 sont activés par l'appui de l'utilisateur sur la touche de commande 3, par exemple par l'intermédiaire du moyen de commande. Les moyens de rétroéclairage 41 sont désactivés par un nouvel appui de l'utilisateur sur la touche de commande 3.

Le dispositif de commande 1 est également muni de seconds moyens de rétroéclairage 43 dont la couleur d'éclairage est différente de la couleur d'éclairage des premiers moyens de rétroéclairage 41. Les seconds moyens de rétroéclairages 43 sont positionnés à l'interface entre deux touches 3 contiguës de manière à éclairer les témoins de fonction 39 de deux touches de commande 3 contiguës et sont activés indépendamment du statut d'activation des fonctions associées aux touches de commande 3.

Selon un premier mode de réalisation du dispositif de commande 1, les seconds moyens de rétroéclairage 43 sont désactivés lorsque les premier moyens de rétroéclairage 41 sont activés tandis que selon un deuxième mode de réalisation, les seconds moyens de rétroéclairage 43 restent activés lorsque les premiers moyens de rétroéclairage 41 sont activés. L'activation des seconds moyens de rétroéclairage 43 peut être liée à l'activation des feux du véhicule ou à l'activation d'une commande dédiée ou s'opérer dès que le moteur du véhicule est allumé.

Les premiers 41 et seconds 43 moyens de rétroéclairage du dispositif de commande sont situés derrière les touches sur une platine 31 alimentée en énergie électrique et qui peut également servir de support aux différents éléments des touches de commandes 3 comme par exemple l'élément mobile 7.

De plus, le dispositif de commande 1 comprend des parois ou cloisons opaques 44 situées entre les touches de commande 3 et en regard des seconds moyens de rétroéclairage 43. Ces parois opaques 44 permettent non seulement d'éviter que la lumière issue des seconds moyens de rétroéclairage 43 soit diffusée directement entre les touches de commande 3 mais contribuent également au guidage mécanique des éléments mobiles 7 des touches de commande 3.

Afin de permettre la propagation de la lumière issue des premiers 41 et des seconds 43 moyens de rétroéclairage jusqu'au témoin de fonction 39 situé à l'extrémité de la partie externe 11 de l'élément mobile 7, ledit élément mobile 7 est constitué au moins partiellement d'un guide de lumière 27. En particulier, la partie de l'élément mobile 7 située en regard du témoin de fonction 39 constitue un guide de lumière 27. Le guide de lumière 27 est par exemple réalisé en polycarbonate ou en polyméthacrylate de méthyle ce qui permet d'obtenir un élément transparent ou translucide. Les premiers moyens de rétroéclairage 41 sont positionnés derrière et en regard du guide de lumière 27 et du témoin de fonction 39 d'une touche de commande 3 tandis que les seconds moyens de rétroéclairage 43 sont positionnés derrière et entre les guides de lumière 27 de deux touches de commande 3 contiguës de manière à pouvoir transmettre de la lumière vers les deux guides de lumière 27. Un seul moyen de rétroéclairage 43 permettant ainsi d'éclairer deux guides de lumière 27 et par conséquent deux témoins de fonction 39 de deux touches de commande 3 contiguës.

D'autre part, la surface périphérique 12 de la partie externe 11 des touches de commande 3 est peinte ou chromée sauf au niveau du témoin de fonction 39 ou du pictogramme 17. En effet la partie externe 11 est constitué au moins partiellement par le guide de lumière 27 de sorte que la peinture ou le chrome permettent de rendre la partie externe 11 opaque sauf au niveau du témoin de fonction 39. La lumière issue des premiers 41 et/ou des seconds 43 moyens de rétroéclairage sort alors du guide de lumière au niveau du témoin de fonction 39 qui peut être un pictogramme 17.

Pour réaliser le témoin de fonction 39, un masque peut être utilisé lors de l'application de la peinture ou du chrome sur la surface extérieure du guide lumière 27 formant la partie externe 11 ou un grattage laser peut être effectué après l'application de la peinture ou du chrome pour enlever la peinture ou le chrome au niveau du témoin de fonction 39. D'autres méthodes de l'état de la technique pour obtenir le témoin de fonction 39 ou le pictogramme 17 peuvent également être utilisées.

Selon un premier mode de réalisation du guide de lumière 27 présenté sur la figure 1, les zones latérales périphériques 46 situées à proximité de la partie externe 11 du guide de lumière 27 de l'élément mobile 7 sont dépourvues de peinture ou de chrome pour être transparentes ou translucides et laisser sortir latéralement la lumière issue des premiers 41 et/ou des seconds 43 moyens de rétroéclairage et créer ainsi un halo de lumière autour des touches de commande 3.

Il est à noter que l'effet halo de lumière peut être modulé de manière à être par exemple plus important pour les premiers moyens de rétroéclairage 41 que pour les seconds moyens de rétroéclairage 43. Cette différence est créée par le positionnement des premiers 41 et seconds 43 moyens de rétroéclairage et la forme du guide de lumière 27 qui va maintenant être décrite plus en détail.

Le guide de lumière 27 présente des parties concaves 45 au niveau des coins situés à proximité des seconds moyens de rétroéclairage 43. La forme concave des coins 45 permet de maximiser la quantité de lumière issue des deuxièmes moyens de rétroéclairage 43 transmise dans le guide de lumière 27. Lorsqu'une touche de commande est entourée par deux autres touches de commande 3 contiguës, le guide de lumière 27 de la touche de commande 3 centrale reçoit la lumière issue des deuxième moyens de rétroéclairage 43 situés de part et d'autre du guide de lumière 27.

D'autre part, la surface 48 du guide de lumière 27 située en regard des premiers moyens de rétroéclairage 41 et correspondant à la surface d'entrée des rayons lumineux issus du premier moyen de rétroéclairage 41 comprend une forme en dents de scie. Cette forme en dents de scie permet de faire varier fortement l'angle d'incidence des rayons lumineux issus du premier moyen de rétroéclairage 41 le long de ladite surface d'entrée 48. Ainsi, les angles de réfraction dans le guide de lumière 27 varient également fortement le long de cette surface 48 ce qui permet de répartir ou diffuser les rayons lumineux dans le guide de lumière 27. On obtient ainsi une saturation du guide de lumière 27. Cette saturation permet de renforcer l'effet halo de lumière obtenu autour de la touche de commande 3 lorsque les premiers moyens de rétroéclairage 41 sont activés.

Selon un autre mode de réalisation représenté sur la figure 4, les premiers moyens de rétroéclairage 41 comprennent deux diodes électroluminescentes situées d'un côté et de l'autre de la surface 48 de manière à augmenter encore l'intensité du halo de lumière obtenu autour des touches de commande 3.

Selon un deuxième mode de réalisation du guide de lumière présenté sur la figure 2, le guide de lumière 27 comprend des zones latérales 47 présentant une structure ou revêtement opaque, par exemple par application de peinture ou de chrome ou par l'utilisation d'une matière opaque. Ces zones latérales opaques 47 empêchent la lumière de sortir du guide de lumière au niveau des parois latérales de sorte que seul le témoin de fonction 39 ou le pictogramme 17 est éclairé lorsque les premiers 41 et/ou les seconds 43 moyens de rétroéclairage sont activés. Ainsi, dans ce mode de réalisation, seule les zones correspondant à la surface d'entrée 48, les coins 45 et le témoin de lumière 39 ou pictogramme 17 sont translucides ou transparentes, les zones latérales 47 étant opaques. Dans ce cas, il n'y a pas de formation d'un halo de lumière et seul le témoin de fonction 39 ou pictogramme 17 est éclairé.

Ainsi, l'utilisation de seconds moyens de rétroéclairage 43 de couleur distinctes des premiers moyens de rétroéclairage 41 et le positionnement des seconds moyens de rétroéclairage 43 entre deux touches de commande 3 contiguës permet d'obtenir un rétroéclairage permettant la localisation des touches de commande 3 et l'état d'activation des fonctions associées aux touche de commande 3. De plus, le positionnement des seconds moyens de rétroéclairage 43 permet de réduire le nombre total de diodes nécessaires et de réduire l'encombrement total du dispositif de commande 1. Par ailleurs, l'utilisation d'un guide de lumière 27 présentant des coins concaves 45 et une surface d'entrée 48 en dents de scie permet de maximiser la quantité de lumière transmise par le guide de lumière et d'obtenir un effet halo de lumière autour de la touche de commande grâce à la diffusion produite par la géométrie en dents de scie.

## Revendications

1. Dispositif de commande à touches (1) comprenant au moins deux touches de commande (3) associées à des fonctions et disposées de manière contiguë l'une par rapport à l'autre, lesdites au moins deux touches de commande (3) comprenant respectivement :
- un élément mobile (7) destiné à évoluer entre une position de repos et une position de commande qui comprend une partie externe (11) sur laquelle vient appuyer un utilisateur,
- un témoin de fonction (39) situé sur la partie externe (11) de l'élément mobile (7),
- des premiers moyens de rétroéclairage (41) configurés pour rétroéclairer le témoin de fonction (39) lorsque la fonction associée à la touche de commande (3) est activée, le dispositif de commande (1) comprenant également des seconds moyens de rétroéclairage (43) ayant une couleur différente des premiers moyens de rétroéclairage (41) et destinés à être activés indépendamment du statut d'activation de la fonction associée à la touche de commande (3), **caractérise en ce que** lesdits seconds moyens de rétroéclairage (43) sont disposés à l'interface entre deux touches de commande (3) contiguës de manière à éclairer les témoins de fonction (39) de deux touches contiguës.

2. Dispositif de commande (1) selon la revendication 1 dans lequel ledit dispositif (1) comprend des parois opaques (44) situées entre les touches de commande (3) contiguës et en regard des seconds moyens de rétroéclairage (43), lesdites parois opaques (44) permettant le guidage mécanique des éléments mobiles (7) des touches de commande (3).

3. Dispositif de commande (1) selon l'une des revendications précédentes dans lequel la partie de l'élément mobile (7) en regard avec le témoin de fonction (39) comprend un guide de lumière (27) configuré pour transmettre la lumière issue des premiers (41) et seconds (43) moyens de rétroéclairage vers le témoin de fonction (39).

4. Dispositif de commande (1) selon la revendication 3 dans lequel les coins (45) du guide de lumière situés à proximité des seconds moyens de rétroéclairage sont de forme concave pour capter la lumière issue desdits seconds moyens de rétroéclairage (43).

5. Dispositif de commande (1) selon la revendication 3 ou 4 dans lequel la partie du guide de lumière (27) située en regard des premiers moyens de rétroéclairage (41) a une forme en dents de scie pour répartir la lumière dans le guide de lumière (27).

6. Dispositif de commande (1) selon l'une des revendications précédentes dans lequel les premiers (41) et seconds (43) moyens de rétroéclairage comprennent au moins une diode électroluminescente.

7. Dispositif de commande selon l'une des revendications 4 à 7 dans lequel la surface du guide de lumière (27) située à proximité de la partie externe (11) de l'élément mobile (7) comprend une partie transparente ou translucide et une partie opaque, la partie transparente ou translucide correspondant au témoin de fonction (39) et à une zone latérale périphérique (46).

8. Dispositif de commande selon l'une des revendications 4 à 7 dans lequel la surface du guide de lumière (27) située à proximité de la partie externe (11) de l'élément mobile (7) comprend une partie transparente ou translucide et une partie opaque, la partie transparente ou translucide correspondant au témoin de fonction (39).

9. Dispositif de commande selon la revendication 7 ou 8 dans lequel la partie opaque est obtenue par application d'une peinture ou d'un chrome opaque.

10. Dispositif de commande selon l'une des revendications précédentes dans lequel le témoin de fonction (39) est un pictogramme (17) indiquant la fonction de commande associée à la touche de commande (3).

## Patentansprüche

1. Steuervorrichtung mit Tasten (1), die mindestens zwei Steuertasten (3) enthält, welche Funktionen zugeordnet und aneinander angrenzend angeordnet sind, wobei die mindestens zwei Steuertasten (3) je enthalten:
- ein bewegliches Element (7), das dazu bestimmt ist, sich zwischen einer Ruhestellung und einer Steuerstellung zu bewegen, das einen äußeren Teil (11) enthält, auf den ein Benutzer drückt,
- eine Funktionskontrollleuchte (39), die sich auf dem äußeren Teil (11) des beweglichen Elements (7) befindet,
- erste Hintergrundbeleuchtungseinrichtungen (41), die konfiguriert sind, die Funktionskontrollleuchte (39) zu hinterleuchten, wenn die der Steuertaste (3) zugeordnete Funktion aktiviert wird,
wobei die Steuervorrichtung (1) ebenfalls zweite Hintergrundbeleuchtungseinrichtungen (43) enthält, die eine andere Farbe als die ersten Hintergrundbeleuchtungseinrichtungen (41) haben und dazu bestimmt sind, unabhängig vom Status der Aktivierung der der Steuertaste (3) zugeordneten Funktion aktiviert zu werden, **dadurch gekennzeichnet, dass**
die zweiten Hintergrundbeleuchtungseinrichtungen (43) an der Schnittstelle zwischen zwei aneinandergrenzenden Steuertasten (3) angeordnet sind, um die Funktionskontrollleuchten (39) von zwei aneinandergrenzenden Tasten zu beleuchten.

2. Steuervorrichtung (1) nach Anspruch 1, wobei die Vorrichtung (1) lichtundurchlässige Wände (44) enthält, die sich zwischen den aneinandergrenzenden Steuertasten (3) und gegenüber den zweiten Hintergrundbeleuchtungseinrichtungen (43) befinden, wobei die lichtundurchlässigen Wände (44) die mechanische Führung der beweglichen Elemente (7) der Steuertasten (3) erlauben.

3. Steuervorrichtung (1) nach einem der vorhergehenden Ansprüche, wobei der Teil des beweglichen Elements (7) gegenüber der Funktionskontrollleuchte (39) einen Lichtleiter (27) enthält, der konfiguriert ist, das von den ersten (41) und zweiten (43) Hintergrundbeleuchtungseinrichtungen stammende Licht zur Funktionskontrollleuchte (39) zu übertragen.

4. Steuervorrichtung (1) nach Anspruch 3, wobei die Ecken (45) des Lichtleiters, die sich in der Nähe der zweiten Hintergrundbeleuchtungseinrichtungen befinden, eine konkave Form haben, um das von den zweiten Hintergrundbeleuchtungseinrichtungen (43) stammende Licht aufzufangen.

5. Steuervorrichtung (1) nach Anspruch 3 oder 4, wobei der Teil des Lichtleiters (27), der sich gegenüber den ersten Hintergrundbeleuchtungseinrichtungen (41) befindet, eine Sägezahnform hat, um das Licht im Lichtleiter (27) zu verteilen.

6. Steuervorrichtung (1) nach einem der vorhergehenden Ansprüche, wobei die ersten (41) und zweiten (43) Hintergrundbeleuchtungseinrichtungen mindestens eine Elektrolumineszenzdiode enthalten.

7. Steuervorrichtung nach einem der Ansprüche 4 bis 7, wobei die Fläche des Lichtleiters (27), die sich in der Nähe des äußeren Teils (11) des beweglichen Elements (7) befindet, einen durchsichtigen oder durchscheinenden Teil und einen lichtundurchlässigen Teil enthält, wobei der durchsichtige oder durchscheinende Teil der Funktionskontrollleuchte (39) und einer seitlichen Umfangszone (46) entspricht.

8. Steuervorrichtung nach einem der Ansprüche 4 bis 7, wobei die Fläche des Lichtleiters (27), die sich in der Nähe des äußeren Teils (11) des beweglichen Elements (7) befindet, einen durchsichtigen oder durchscheinenden Teil und einen lichtundurchlässigen Teil enthält, wobei der durchsichtige oder durchscheinende Teil der Funktionskontrollleuchte (39) entspricht.

9. Steuervorrichtung nach Anspruch 7 oder 8, wobei der lichtundurchlässige Teil durch Aufbringen eines lichtundurchlässigen Lacks oder Chroms erhalten wird.

10. Steuervorrichtung nach einem der vorhergehenden Ansprüche, wobei die Funktionskontrollleuchte (39) ein Piktogramm (17) ist, das die der Steuertaste (3) zugeordnete Steuerfunktion anzeigt.

## Claims

1. Control device with keys (1) comprising at least two control keys (3) associated with functions and arranged contiguously to one another, said at least two control keys (3) respectively comprising:
- a mobile element (7) intended to move between an idle position and a control position which comprises an outer part (11) on which a user presses,
- a function indicator (39) situated on the outer part (11) of the mobile element (7),
- first backlighting means (41) configured to backlight the function indicator (39) when the function associated with the control key (3) is activated,
the control device (1) also comprising second backlighting means (43) having a different colour from the first backlighting means (41) and intended to be activated independently of the activation status of the function associated with the control key (3), **characterized in that**
said second backlighting means (43) are arranged at the interface between two contiguous control keys (3) so as to light the function indicators (39) of two contiguous keys.

2. Control device (1) according to Claim 1, in which said device (1) comprises opaque walls (44) situated between the contiguous control keys (3) and facing the second backlighting means (43), said opaque walls (44) allowing the mechanical guidance of the mobile elements (7) of the control keys (3).

3. Control device (1) according to one of the preceding claims, in which the part of the mobile element (7) facing the function indicator (39) comprises a light guide (27) configured to transmit the light from the first (41) and second (43) backlighting means to the function indicator (39).

4. Control device (1) according to Claim 3, in which the corners (45) of the light guide situated in proximity to the second backlighting means are of concave form to capture the light from said second backlighting means (43).

5. Control device (1) according to Claim 3 or 4, in which the part of the light guide (27) situated facing the first backlighting means (41) has a sawtooth form to distribute the light in the light guide (27).

6. Control device (1) according to one of the preceding claims, in which the first (41) and second (43) backlighting means comprise at least one light-emitting diode.

7. Control device according to one of Claims 4 to 7, in which the surface of the light guide (27) situated in proximity to the outer part (11) of the mobile element (7) comprises a transparent or translucent part and an opaque part, the transparent or translucent part corresponding to the function indicator (39) and to a peripheral lateral zone (46).

8. Control device according to one of Claims 4 to 7, in which the surface of the light guide (27) situated in proximity to the outer part (11) of the mobile element (7) comprises a transparent or translucent part and an opaque part, the transparent or translucent part corresponding to the function indicator (39).

9. Control device according to Claim 7 or 8, in which the opaque part is obtained by the application of a paint or of an opaque chromium plating.

10. Control device according to one of the preceding claims, in which the function indicator (39) is a pictogram (17) indicating the control function associated with the control key (3).
